# EUROPEAN PATENT APPLICATION

(11) **EP 4 614 896 A1**
(43) Date of publication of application: **10.09.2025**
(21) Application number: 22963977.8
(22) Date of filing: 03.11.2022
(51) Int. Cl.: H04L 27/00

(54) **BUFFER STATUS REPORT UPLOADING METHOD AND APPARATUS, AND DEVICE, STORAGE MEDIUM AND CHIP**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2022/129675
(87) International publication number: WO 2024/092667

(57) **Abstract**

A buffer status report uploading method and apparatus, and a device, a storage medium and a chip, which relate to the technical field of communications. The method comprises: in response to a change in at least one of an amount of data to be transmitted by a user device and a remaining delay budget of the amount of data to be transmitted, updating and reporting a buffer status report. By means of a buffer status report uploading method and apparatus, and a device, a storage medium and a chip, when at least one of an amount of data to be transmitted and a remaining delay budget of the amount of data to be transmitted changes due to batch packet loss, a buffer status report is updated and reported, such that a network allocates to a user device transmission resources, which match the data to be transmitted, according to the updated buffer status report, and the waste of transmission resources is thus reduced.

## Description

### TECHNICAL FIELD

The present disclosure relates to the field of communication technology, and in particular, to a method and device for reporting a buffer status report (BSR), an apparatus, a storage medium and a chip.

### BACKGROUND

In a network system, a UE (terminal) will report a BSR (Buffer Status report/Buffer Status reporting) to a network in an uplink, the BSR provides a data volume in a buffer of the UE to be transmitted to the network, and the network allocates transmission resources for the UE to transmit data based on the BSR reported by the UE.

APDU set (Protocol Data Unit set) includes a plurality of PDUs (Protocol Data Units). In the discarding mechanism of PDCP (Packet Data Convergence Protocol) layer, the PDCP layer may discard the PDU set by taking the PDU set as the smallest discarding unit.

### SUMMARY

The present disclosure provides a method and device for reporting a buffer status report (BSR), an apparatus, a storage medium and a chip.

A first aspect of embodiments of the present disclosure provides a method for reporting a BSR, performed by a user equipment (UE), and including:
updating and reporting the BSR in response to a change in at least one of a to-be-transmitted data volume of the UE and a remaining delay budget of the to-be-transmitted data volume.

A second aspect of embodiments of the present disclosure provides a method for reporting a BSR, performed by a network device, and including:
receiving a BSR updated and reported by a UE.

A third aspect of embodiments of the present disclosure provides a device for reporting a BSR, configured in a UE, and including:
a BSR sending module, configured to update and report the BSR in response to a change in at least one of a to-be-transmitted data volume of the UE and a remaining delay budget of the to-be-transmitted data volume.

A fourth aspect of embodiments of the present disclosure provides a device for reporting a BSR, configured in a network device, and including:
a BSR receiving module, configured to receive a BSR updated and reported by a UE.

A fifth aspect of embodiments of the present disclosure provides a UE, including:
a processor; and
a memory storing executable instructions of the processor,
wherein the processor is configured to implement the step of the method for reporting BSR according to the first aspect of the embodiments of the present disclosure when executing the executable instructions.

A six aspect of embodiments of the present disclosure provides a network device, including:
a processor; and
a memory storing executable instructions of the processor,
wherein the processor is configured to implement the step of the method for reporting BSR according to the second aspect of the embodiments of the present disclosure when executing the executable instructions.

A seventh aspect of embodiments of the present disclosure provides a computer-readable storage medium having computer program instructions stored thereon that, when being executed by a processor, implement the step of the method for reporting BSR according to the first aspect of the embodiments of the present disclosure or the step of the method for reporting BSR according to the second aspect of the embodiments of the present disclosure.

An eighth aspect of embodiments of the present disclosure provides a chip including a processor and an interface, the processor being configured to read instructions to perform the step of the method for reporting BSR according to the first aspect of the embodiments of the present disclosure or the step of the method for reporting BSR according to the second aspect of the embodiments of the present disclosure.

With the above technical solution, the case where at least one of a to-be-transmitted data volume of a UE and a remaining delay budget of the to-be-transmitted data volume is changed indicates that a PDCP layer may discard a PDU in a PDU set, resulting in a change in the to-be-transmitted data volume and/or the remaining delay budget of the to-be-transmitted data volume, at which time, in order to avoid that a network authorizes redundant transmission resources for the UE, the UE may re-report BSR, and the re-reported BSR carries the changed to-be-transmitted data volume and/or remaining delay budget of the to-be-transmitted data volume, so that the network may allocate transmission resources that match the to-be-transmitted data volume to the UE based on the changed to-be-transmitted data volume and/or remaining delay budget of the to-be-transmitted data volume without allocating excessive transmission resources, thereby avoiding the waste of transmission resources.

### BRIEF DESCRIPTION OF THE DRAWINGS

FIG. 1 is a flowchart of a method for reporting a buffer status report (BSR) according to an exemplary embodiment.
FIG. 2 is a flowchart of a method for reporting BSR according to an exemplary embodiment.
FIG. 3 is a flowchart of a method for reporting BSR according to an exemplary embodiment.
FIG. 4 is a flowchart of a method for reporting BSR according to an exemplary embodiment.
FIG. 5 is a flowchart of a method for reporting BSR according to an exemplary embodiment.
FIG. 6 is a flowchart of a method for reporting BSR according to an exemplary embodiment.
FIG. 7 is a flowchart of a method for reporting BSR according to an exemplary embodiment.
FIG. 8 is a flowchart of a method for reporting BSR according to an exemplary embodiment.
FIG. 9 is a flowchart of a method for reporting BSR according to an exemplary embodiment.
FIG. 10 is a flowchart of a method for determining a switching delay according to an exemplary embodiment.
FIG. 11 is a flowchart of a method for reporting BSR according to an exemplary embodiment.
FIG. 12 is a flowchart of a method for reporting BSR according to an exemplary embodiment.
FIG. 13 is a flowchart of a method for reporting BSR according to an exemplary embodiment.
FIG. 14 is a flowchart of a method for reporting BSR according to an exemplary embodiment.
FIG. 15 is a flowchart of a method for reporting BSR according to an exemplary embodiment.
FIG. 16 is a flowchart of a method for reporting BSR according to an exemplary embodiment.
FIG. 17 is a flowchart of a method for reporting BSR according to an exemplary embodiment.
FIG. 18 is a flowchart of a method for reporting BSR according to an exemplary embodiment.
FIG. 19 is a flowchart of a method for reporting BSR according to an exemplary embodiment.
FIG. 20 is a flowchart of a method for reporting BSR according to an exemplary embodiment.
FIG. 21 is a flowchart of a method for reporting BSR according to an exemplary embodiment.
FIG. 22 is a flowchart of a method for reporting BSR according to an exemplary embodiment.
FIG. 23 is a flowchart of a method for reporting BSR according to an exemplary embodiment.
FIG. 24 is a block diagram of a device for reporting BSR according to an exemplary embodiment.
FIG. 25 is a block diagram of a device for reporting BSR according to an exemplary embodiment.
FIG. 26 is a block diagram of a user equipment according to an exemplary embodiment.
FIG. 27 is a block diagram of a network device according to an exemplary embodiment.

### DETAILED DESCRIPTION

Exemplary embodiments will be described herein in detail, examples of which are represented in the accompanying drawings. When the following description relates to the accompanying drawings, the same reference numeral in the different figures indicates the same or similar element unless otherwise indicated. The implementations described in the following exemplary embodiments do not represent all implementations consistent with the present disclosure. Rather, they are only examples of devices and methods consistent with some aspects of the present disclosure as detailed in the appended claims.

It is to be noted that all actions of acquiring signals, information or data in the present disclosure are performed in compliance with the corresponding data protection regulations and policies of the local country and with authorization by the owner of the corresponding device.

For ease of understanding, the terms involved in the present disclosure are first introduced.
1. BSR (Buffer Status report/Buffer Status reporting), a UE reports the BSR to a network before transmitting data to the network, the BSR provides a data volume in a buffer of the UE to be transmitted to the network, and the network allocates transmission resources for the UE to transmit data based on the BSR reported by the UE.
2. The related art involves following mechanisms for triggering BSR, and the BSRs that are triggered under different mechanisms are called different BSRs.
   1). First type of regular BSR, UL (Uplink) data transmitted by the UE to the network belongs to a logical channel, and the priority of this logical channel is higher than the priority of any logical channel transmitting UL data, which can also be understood as that the logical channel with the highest priority among a plurality of logical channels of the UE has UL data, and the logical channel with the highest priority will trigger reporting of the BSR.
   2). Second type of regular BSR, one of the plurality of logical channels of the UE has UL data to be transmitted, the rest of the logical channels do not have UL data to be transmitted, and the logical channel that has the UL data triggers reporting of BSR.
   3). Padding BSR, the UE has allocated UL resources, and the number of padding bits is greater than or equal to the size of the BSR MAC CE (control element (CE) of MAC layer) of the BSR and the subheader of the MAC CE, which triggers the UE to report the BSR.

When the to-be-transmitted data volume of the UE exceeds the buffer size, the padding bit space is used for sending the BSR. The control plane protocol layer structure in the network system may include functions of protocol layers such as RRC (Radio Resource Control) layer, PDCP (Packet Data Convergence Protocol) layer, RLC (Radio Link Control) layer, MAC (Media Access Control) layer, and physical layer, or the like. The MAC layer proposed in this paragraph and the PDCP layer to be described below each belongs to one of the control plane protocol layer structures, the MAC layer is responsible for HARQ (Hybrid Automatic Repeat Request) and scheduling functions, and the PDCP layer is responsible for segmented linking, header compression and encryption, etc. of the data from the RLC layer.

4). Retransmission BSR, at least one logical channel belonging to a logical channel group contains UL data, and when retxBSR-Timer (BSR retransmission time) expires, the UE is triggered to report the BSR.

5). Periodic BSR, when periodicBSR-Timer (periodic reporting time) expires, the UE is triggered to report the BSR.

3. LC (Logical Channel) and LCG (Logical Channel Group), the UE generally divides the LCs into LCGs with different priorities, and the LCGs with different priorities are used to send BSRs of different classes. For example, in the standardized QCIs (1-9) specified in 3GPP (TS23.203), QCIs (1-3) are mapped to LCG1, QCIs (4-6) are mapped to LCG2, and QCIs (7-9) are mapped to LCG3; the non-standardized QCIs (10-256) are mapped to LCG3; LCG0 is used to send SRBs (signaling radio bearers), and BSRs 0-3 are sent on LCGs 0-3 respectively.

4. PDU (Protocol Data Unit) and PDU set (Protocol Data Unit set), the PDU is a data unit transmitted between peer-to-peer levels, for example, the PDU of the physical layer is a data bit, the PDU of the data link layer is a data frame, the PDU of the network layer is a data packet, the PDU of the transport layer is a data segment, and other PDUs with a higher level are messages. In practice, the PDU can be uniformly called as data packet in each level.

5. PDCP (Packet Data Convergence Protocol) layer, the UE discards data in the PDCP layer thereof by taking the PDU set as the smallest discarding unit. In the discarding by the PDCP, each SDU (Service Data Unit) manages the PDU set, and the PDCP discards all the PDUs associated with the PDU set. For example, the UDP (User Datagram Protocol) marks the PDU sets in the GTP-U layer for DL PDU via GTP-U header extension, and the UDP identifies a plurality of PDUs belonging to a single PDU set. For example, based on a sequence number of the PDU set (PDU Set SN), a start PDU (the start PDU is the first PDU in the PDU set) and an end PDU (the end PDU is the last PDU in the PDU set) of the PDU set, a sequence number of each PDU in the PDU set, and the number of PDUs in the PDU set, the PDU determines a boundary of the PDU set, and then when a PDU in the PDU set is lost, discards all PDUs in the entire PDU set based on the boundary of the PDU set.

For some services, the data is not differentiated based on importance thereof, most of the PDUs in the PDU set arrive at an application layer, and the remaining PDUs can be correctly decoded by the error correction mechanism of the application layer even if they do not arrive at the application layer. For some other services such as XR (eXtended Reality) service, the data is differentiated based on importance thereof. For example, the data frames are divided into I-frame (important frame) and P-frame (prediction frames), because when decoding the P-frame, the UE may not decode the P-frame separately without the I-frame, all the PDU sets contained in the data frames such as the I-frames and P-frames shall arrive at the application layer in order to decode the data correctly. The XR service includes: AR (Augmented Reality), VR (Virtual Reality) and MR (Mixed reality).

For the case where the correct decoding is possible when the PDU set arrives at the application layer, if a PDU in the PDU set is lost, the PDCP layer would delete all PDUs in the PDU set in the PDCP layer based on the discarding mechanism, and the deleted PDU does not needed to be not transmitted further, which wastes the transmission resource for the deleted PDU authorized by the network.

For example, there are 20 PDUs in one PDU set, the UE reports the to-be-transmitted data volume of 20 PDUs in the BSR, and the network authorizes the scheduling of the transmission resources for 3 PDUs among the 20 PDUs. However, if the first PDU of the three PDUs (assuming that the first PDU is an I-frame which is relatively important) is lost during the scheduling authorized by the network, based on the discarding mechanism at the PDCP layer, all the PDUs in the PDU set are deleted at the PDCP layer, these deleted PDUs do not needed to be transmitted further, and the UE no longer needs the transmission resources for these deleted PDUs. In this case, the network still authorizes the transmission resources of three PDUs for the UE based on the to-be-transmitted data volume reported by the BSR, which results in a waste of transmission resources.

In the related art, in the process of data transmission by the UE using the transmission resources, if a PDU in a PDU set in the PDCP layer is lost, the PDCP layer deletes the entire PDU set based on the discarding mechanism, so that all the PDUs in the PDU set do not need to be transmitted further. At this time, if the network still allocates transmission resources for the deleted PDUs based on the to-be-transmitted data volume in the BSR previously reported by the UE, it may lead to a waste of transmission resources.

In order to avoid that the network authorizes redundant transmission resources for the UE, in the present disclosure, the BSR is re-reported in a case where at least one of a to-be-transmitted data volume and a remaining delay budget of the to-be-transmitted data volume is changed, so that the network may reasonably authorizes transmission resources for the UE based on the re-reported BSR to avoid that the network allocates redundant transmission resources for the UE.

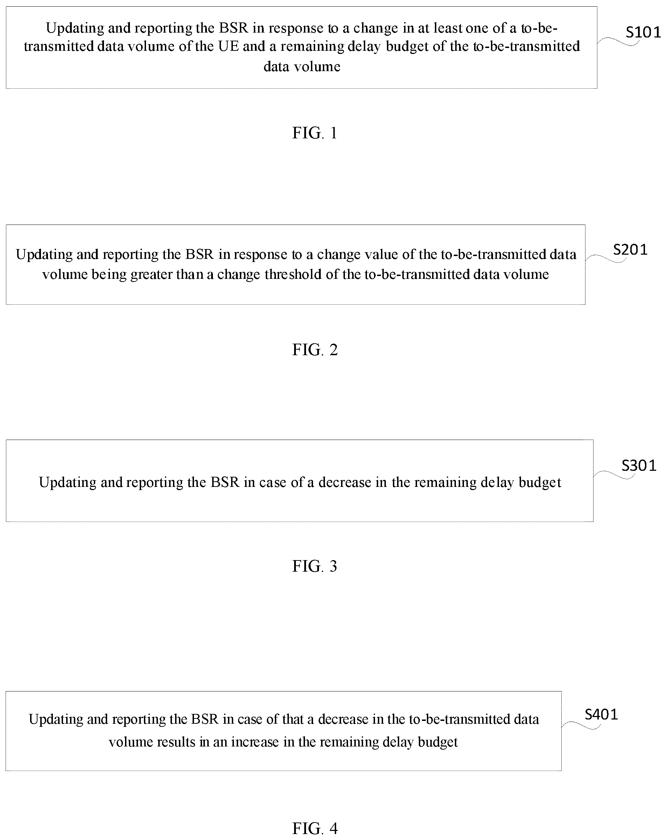

FIG. 1 illustrates a method for reporting a buffer status report (BSR) according to an exemplary embodiment, which is executed by a user equipment (UE). As shown in FIG. 1, the method for reporting BSR includes:
step S101, updating and reporting the BSR in response to a change in at least one of a to-be-transmitted data volume of the UE and a remaining delay budget of the to-be-transmitted data volume.

The UE in any embodiment of the present disclosure may be a mobile phone, a tablet, a portable computer, a computer with a wireless transceiver function, a virtual reality (VR) terminal device, an augmented reality (AR) terminal device, a wireless terminal in industrial control, a wireless terminal in smart grid, a wireless terminal in transport safety, a wireless terminal in smart city, a wireless terminal in smart home, or the like. The application scenarios are limited in the present disclosure, and the UE may sometimes be referred to as a terminal device, a terminal, an access terminal, a UE unit, a UE station, a mobile device, a mobile site, a mobile station, a mobile client, or the like.

The to-be-transmitted data volume of the UE may be the to-be-transmitted data volume in a buffer of the UE, and the remaining delay budget of the to-be-transmitted data volume may be the remaining time duration for the to-be-transmitted data corresponding to the to-be-transmitted data volume to be transmitted from the buffer. For example, the UE allocates a delay budget of 10ms for the to-be-transmitted data in the buffer, and after 8ms, the to-be-transmitted data in the buffer is left with 2ms to be transmitted from the buffer, and 2ms is the remaining delay budget.

The change in the to-be-transmitted data volume includes increase and decrease in the to-be-transmitted data volume. When the to-be-transmitted data volume increases, it means that new data arrives at the buffer; and when the to-be-transmitted data volume decreases, a situation in which the PDCP layer discards the PDU set may occur, and the PDCP layer discarding the PDU set may be that the packet data is discarded at the PDCP layer in bulk.

In the case where the to-be-transmitted data volume of the UE increases, since the current to-be-transmitted data volume is more than the to-be-transmitted data volume previously reported by the UE to the network, if the network authorizes transmission resources for the UE based on the to-be-transmitted data volume in the previous BSR, it may result in insufficient transmission resources being allocated to the UE, so that a part of the current to-be-transmitted data may not be transmitted in a timely manner.

In related art, the regular BSR usually triggers the reporting of BSR only when the data in the buffer comes out from nothing, and the regular BSR may not trigger the re-reporting of BSR when the data in the buffer increases.

In the present disclosure, in order that the to-be-transmitted data of the UE may be sent in time when the to-be-transmitted data volume increases, the BSR may be updated and reported in the case where the to-be-transmitted data volume of the UE increases, and the updated and reported to-be-transmitted data volume is more than the to-be-transmitted data volume in the BSR reported previously, so that the network may authorize more transmission resources for the UE based on the updated BSR, and the UE may send the increased to-be-transmitted data in time based on the more transmission resources.

In the case where the to-be-transmitted data volume of the UE decreases, when the PDCP layer discards data packets in bulk, it causes a decrease in the to-be-transmitted data volume in the buffer of the UE, and at this time, if the network authorizes transmission resources for the UE based on the to-be-transmitted data volume in the previous BSR, it results in the allocation of redundant transmission resources to the UE, which leads to a waste of transmission resources.

In the present disclosure, in order to reduce the waste of transmission resources when the to-be-transmitted data volume decreases, the BSR may be updated and reported in the case where the to-be-transmitted data volume of the UE decreases, and the updated and reported to-be-transmitted data volume is less than the to-be-transmitted data volume in the BSR reported previously, so that the network may not authorize redundant transmission resources for the UE based on the updated BSR, which thus reduces the waste of transmission resources.

Updating and reporting the BSR in response to a change in the remaining delay budget includes: updating and reporting the BSR if the remaining delay budget increases or decreases compared to the remaining delay budget in the previously reported BSR; or updating and reporting the BSR if the remaining delay budge is less than or equal to a threshold. The change in the remaining delay budget of the to-be-transmitted data volume includes an increase and decrease in the remaining delay budget. When the remaining delay budget increases, a situation in which the PDCP layer discards the PDU set in bulk at may occur; and when the remaining delay budget decreases, a situation in which the to-be-transmitted data is scheduled urgently may occur.

The network may configure the UE to or the protocol may stipulate the UE to update and report the BSR in the case where at least one of the to-be-transmitted data volume of the UE and the remaining delay budget of the to-be-transmitted data volume is changed.

When the network configures the UE, the network sends indication to the UE to indicate the UE to update and report the BSR in the case where the to-be-transmitted data volume in the buffer and/or the remaining delay budget of the to-be-transmitted data volume is changed. When the protocol stipulates the UE, it stipulates on a logical channel and/or a logical channel group between the network and the UE that the BSR is updated and reported in the case where the to-be-transmitted data volume in the buffer of the logical channel and/or the logical channel group is changed, for example, if some types of logical channels and/or logical channel groups are used for transmitting the data of the XR service, the protocol may agree that the BSR may be updated and reported in the case where the to-be-transmitted data volume in the respective buffer of these types of logical channels and/or logical channel groups is changed.

The UE may send the BSR to the network, and the network allocates transmission resources for the UE based on the BSR. In the process of data transmission by the UE using the transmission resources, when the PDCP layer discards the data packet, the UE updates and reports the BSR so as to re-reported the BSR that carries the changed to-be-transmitted data volume and/or the changed remaining delay budget, so that updating and reporting the BSR in any embodiment of the present disclosure may be understood as re-updating the previously reported BSR and then reporting the same.

For example, the previously reported BSR carries the remaining delay budget information and/or the to-be-transmitted data volume and when the field related to the remaining delay budget information and/or the to-be-transmitted data volume in the subsequently reported BSR is empty, it may mean that the previously reported BSR is no longer valid, or that the remaining delay budget information carried in the subsequently reported BSR is no longer valid.

In the above technical solution, in the case where at least one of the to-be-transmitted data volume of the UE and the remaining delay budget of the to-be-transmitted data volume is changed, in order to avoid that the network authorizes redundant transmission resources for the UE, the UE may re-report the BSR, and the re-reported BSR carries the changed to-be-transmitted data volume and/or remaining delay budget of the to-be-transmitted data volume, so that the network may allocate transmission resources that match the to-be-transmitted data volume for the UE based on the changed to-be-transmitted data volume and/or remaining delay budget of the to-be-transmitted data volume without allocating redundant transmission resources, thereby avoiding the waste of transmission resources.

FIG. 2 illustrates a method for reporting BSR according to an exemplary embodiment, which is executed by the UE. As shown in FIG. 2, the method for reporting BSR includes:
step S201, updating and reporting the BSR in response to a change value of the to-be-transmitted data volume being greater than a change threshold of the to-be-transmitted data volume.

The network may configure the UE to or the protocol may stipulate the UE to update and report the BSR when the change value of the to-be-transmitted data volume of the UE is greater than the change threshold of the to-be-transmitted data volume.

The change value of the to-be-transmitted data volume may be the data volume of the data packet discarded in bulk at the PDCP layer or the increased data volume after new data arrives at the buffer. For example, the network configures the UE to or the protocol stipulates the UE to update and report the BSR in the case where the PDCP layer discards the data packet in bulk and the data volume of the discarded data packet is greater than the change threshold of the to-be-transmitted data volume. For example, the network configures the UE to or the protocol stipulates the UE to update and report the BSR in the case where the data volume increased in the buffer is greater than the change threshold of the to-be-transmitted data volume.

The change value of the to-be-transmitted data volume may be any one of a number of discarded data packets, a number of bytes of the discarded data packet, or a number of bits of the discarded data packet. The number of discarded data packets may be a number of data packets or a number of data packet sets. In an embodiment, the to-be-transmitted data volume may be determined by the UE based on the data volume in the PDCP layer and/or RLC.

The change threshold of the to-be-transmitted data volume may be obtained by a base station from a core network and sent to the UE, and the change threshold of the to-be-transmitted data volume may be agreed between the UE and the network based on a protocol.

If the BSR is updated and reported when the to-be-transmitted data volume changes, it may lead to too frequent updating and reporting of the BSR, which may waste the network resources.

In order to reduce the waste of network resources, the present disclosure proposes updating and reporting the BSR only when the change value of the to-be-transmitted data volume is greater than the change threshold of the to-be-transmitted data volume. In this way, the reporting condition of the BSR is raised, and thus the number of times the BSR is reported may be reduced, which may reduce the waste of network resources.

In the above technical solution, by updating and reporting the BSR in response to the change value of the to-be-transmitted data volume being greater than the change threshold of the to-be-transmitted data volume, the reporting condition of the BSR may be raised, and thus the number of times the BSR is reported may be reduced, which may reduce the waste of network resources.

FIG. 3 illustrates a method for reporting BSR according to an exemplary embodiment, which is executed by the UE. As shown in FIG. 3, the method for reporting BSR includes:
step S301, updating and reporting the BSR in case of a decrease in the remaining delay budget.

In the case where the UE urgently schedules a portion of the to-be-transmitted data and thus transmits this portion of the to-be-transmitted data from the buffer, the UE reduces the remaining delay budget of the to-be-transmitted data volume so that the to-be-transmitted data is made to be transmitted from the buffer in a short time period, thereby realizing the urgent scheduling of this portion of the to-be-transmitted data.

For example, the remaining delay budget of the data packet A is 5ms, and in the urgent scheduling of the data packet A in the buffer, the remaining delay budget of the data packet A may be controlled to change from 5ms to 2ms to control the data packet A to be transmitted from the buffer within the remaining time period of 2ms, so as to complete the urgent scheduling of the data packet A.

In the case where the remaining delay budget decreases, it may indicate that the to-be-transmitted data in the buffer is urgently scheduled, and the UE needs to send this portion of the to-be-transmitted data from the buffer in a timely manner, so the BSR may be updated and reported, and the re-reported BSR carries the information that the remaining delay budget of the to-be-transmitted data volume decreases, so that the network authorizes, for the UE, the transmission resources for this portion of the to-be-transmitted data as soon as possible based on the re-reported BSR, so as to complete the urgent scheduling of the to-be-transmitted data in the buffer.

As an example, the BSR may also be reported in the case where the remaining delay budget of the to-be-transmitted data volume is less than or equal to a threshold. In an embodiment, a predetermined threshold may be obtained from a core network and sent to the UE via gNB (the next Generation Node B, 5G base station), or may be stipulated by the network.

In the above technical solution, in the case where the remaining delay budget of the to-be-transmitted data volume is less than or equal to a certain threshold, it indicates that the to-be-transmitted data in the buffer needs to be urgently transmitted from the buffer, then the BSR may be reported to enable the network to authorize the transmission resources for this portion of the to-be-transmitted data in a timely manner based on the updated and reported BSR message.

FIG. 4 illustrates a method for reporting BSR according to an exemplary embodiment, which is executed by the UE. As shown in FIG. 4, the method for reporting BSR includes:
step S401, updating and reporting the BSR in case of that a decrease in the to-be-transmitted data volume results in an increase in the remaining delay budget.

The PDCP layer discards the data packet in bulk, which causes the to-be-transmitted data volume in the buffer to decrease, and the situation where the buffer arrives with new to-be-transmitted data may cause the remaining delay budget to increase, in which case the BSR may be updated and reported.

For example, if the remaining delay budget of the to-be-transmitted data volume is 2ms, but within the 2ms, the PDCP layer discards the data packet in bulk, which results in the loss of all data in the buffer. After new data enters the buffer, the remaining delay budget may reach 10ms, at which time the remaining delay budget is larger than the remaining delay budget when the data packet is not discarded in bulk, and thus the BSR may be updated and reported. In this case, what is indicated in the BSR re-reported by the UE is the to-be-transmitted data volume of the to-be transmitted data newly arrived in the buffer and/or the remaining delay budget of the to-be-transmitted data volume.

It can be seen that for the case where the decrease in the to-be-transmitted data volume results in the increase in the remaining delay budget, it may be that the PDCP layer discards the data packet in bulk and the UE deletes some of the data packets in the buffer, at which time, the BSR may be re-reported to report to the network the remaining delay budget of the to-be-transmitted data volume newly arrived in the buffer. On the one hand, it may enable the network to authorize transmission resources that match the to-be-transmitted data volume in the buffer to the UE, and on the other hand, it may enable the network to know that the data in the buffer does not need to be urgently scheduled for transmission, and that the network does not need to quickly allocate the transmission resources for the to-be-transmitted data in the buffer to the UE, and may allocate the transmission resources to other UEs.

Of course, in an embodiment, in the case where the PDCP layer discards the packet data, which causes the network to delete some of the to-be-transmitted data in the buffer, and thus results in a redundant remaining delay budget, the BSR may be not updated and reported.

For example, if the UE initially allocates a remaining delay budget of 10ms for the data volume of 1000 bits in the buffer, and after 8ms, the remaining delay budget for the to-be-transmitted data volume of 1000 bits in the buffer is 2ms, i.e., there is 2ms for the to-be-transmitted data of 1000 bits to be transmitted from the buffer. At this time, if the network actively deletes the to-be-transmitted data of 1000 bits and new data of 1000 bits arrives in the buffer within 2ms, the remaining delay budget of the newly arrived to-be-transmitted data of 1000 bits is 10ms, and the remaining delay budget is increased, in which case the to-be-transmitted data volume in the buffer does not change, the BSR may not be updated and reported based on the same data volume, and the network may authorize the transmission resources for the UE based on the data volume of 1000 bits.

In the above technical solution, when the remaining delay budget decreases, the BSR may be updated and reported to send a smaller remaining delay budget to the network, so that the network allocates transmission resources for the UE as soon as possible based on the updated and reported remaining delay budget, so as to achieve urgent scheduling of the UE for the to-be-transmitted data; and when the decrease in the to-be-transmitted data volume results in the increase in the remaining delay budget, the BSR may be updated and reported to send the to-be-transmitted data volume of the to-be-transmitted data newly arrived in the buffer and/or the remaining delay budget of the to-be-transmitted data volume to the network, on the one hand, it enables the network to allocate transmission resources that match the data newly arrived in the buffer to the UE based on the updated and reported remaining delay budget, and on the other hand, it enables the network to know, based on the updated and reported remaining delay budget, that the to-be-transmitted data in the buffer of the UE does not need to be urgently scheduled for transmission, so the network may allocate the transmission resources to other UEs.

It is to be understood that the examples shown in FIG. 3 and FIG. 4 above may be respectively used as a separate embodiment, or may be combined to form a new embodiment. When the embodiment illustrated in FIG. 3 is a separate embodiment, the network may quickly authorize transmission resources for the UE based on the updated the reported BSR; and when the embodiment illustrated in FIG. 4 is a separate embodiment, in the case where the PDCP layer discards the data packet, which results in an increase in the to-be-transmitted data volume newly arrived in the buffer, the network may authorize, for the UE, transmission resources matching the to-be-transmitted data volume newly arrived in the buffer based on the updated and reported BSR.

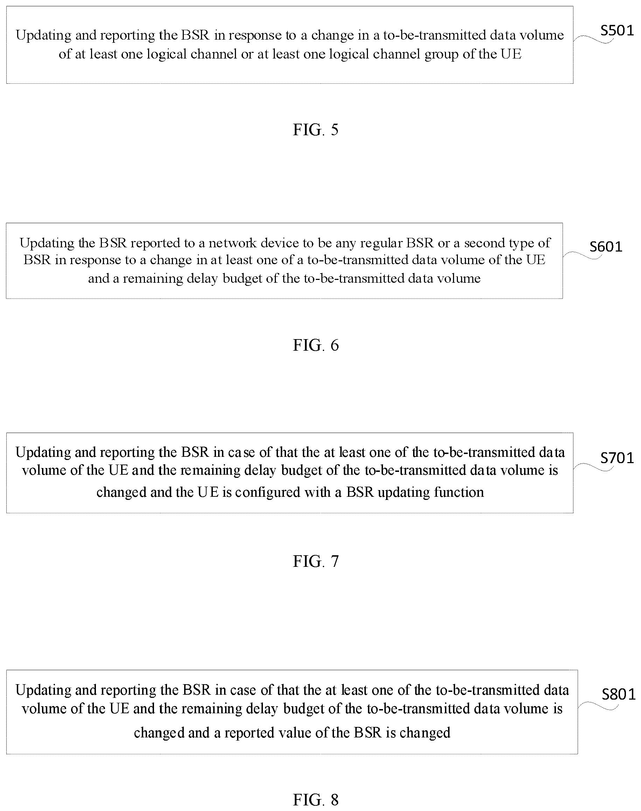

FIG. 5 illustrates a method for reporting BSR according to an exemplary embodiment, which is executed by the UE. As shown in FIG. 5, the method for reporting BSR includes:
step S501, updating and reporting the BSR in response to a change in a to-be-transmitted data volume of at least one logical channel or at least one logical channel group of the UE.

The UE communicates with the network device via at least one logical channel or at least one logical channel group, and each logical channel or logical channel group corresponds to a respective buffer. When the to-be-transmitted data volume in the respective buffer corresponding to the logical channel or logical channel group is changed, the BSR is updated and reported.

Therefore, the to-be-transmitted data volume of the UE may be obtained from the to-be-transmitted data volume of the buffer of at least one logical channel or of at least one logical channel group or of all the logical channels.

For example, in the case where the to-be-transmitted data volume of at least one logical channel is changed, the re-reporting of the BSR may be triggered; in the case where the sum of the to-be-transmitted data volumes of all the logical channels in at least one logical channel group is changed, the re-reporting of the BSR may be triggered; and in the case where the sum of the to-be-transmitted data volumes of all the logical channels is changed, the re-reporting of the BSR may be triggered.

In the above technical solution, the BSR may be re-reported in the case where the to-be-transmitted data volume of at least one logical channel or at least one logical channel group is changed, so that the network may allocate transmission resources that match the changed to-be-transmitted data volume to the UE based on the changed to-be-transmitted data volume indicated in the re-reported BSR.

FIG. 6 illustrates a method for reporting BSR according to an exemplary embodiment, which is executed by the UE. As shown in FIG. 6, the method for reporting BSR includes:
step S601, updating the BSR reported to the network device to be any regular BSR or a second type of BSR in response to the change in at least one of the to-be-transmitted data volume of the UE and the remaining delay budget of the to-be-transmitted data volume.

When updating and reporting the BSR, the updated and reported BSR may be any regular BSR such as the first type of regular BSR or the second type of regular BSR as described above, or may be named as another new type of BSR such as an updated BSR.

In an embodiment, the network may configure the UE or the protocol may stipulate the UE to associate the BSR with a specified logical channel ID or a new logical channel ID when updating and reporting the BSR in case of at least one of the to-be-transmitted data volume being changed, the remaining delay budget of the to-be-transmitted data volume being changed, or the remaining delay budget of the to-be-transmitted data volume being less than or equal to a predetermined threshold, so that upon receipt of the BSR, a base station may identify the type of BSR through the logical channel ID. The association with the specified logical channel ID or the new logical channel ID may be identified by using a reserved LCH (Logical Channel) ID.

As an embodiment, the new logical channel ID may be configured separately for a long BSR and a short BSR.

FIG. 7 illustrates a method for reporting BSR according to an exemplary embodiment, which is executed by the UE. As shown in FIG. 7, the method for reporting BSR includes:
step S701, updating and reporting the BSR in case of that the at least one of the to-be-transmitted data volume of the UE and the remaining delay budget of the to-be-transmitted data volume is changed and the UE is configured with a BSR updating function.

The BSR updating function is a function of re-reporting the BSR when at least one of the to-be-transmitted data volume of the UE and the remaining delay budget of the to-be-transmitted data volume is changed.

In the case where the UE is configured with the BSR updating function and the UE determines that the at least one of the to-be-transmitted data volume and the remaining delay budget of the to-be-transmitted data volume is changed, it may report the BSR for the first time.

For example, after the UE is configured with the BSR updating function, the BSR may be reported for the first time if the to-be-transmitted data in the buffer of the UE comes out from nothing, and the BSR may also be reported for the first time if the remaining delay budget of the to-be-transmitted data volume in the UE comes out from nothing. In this way, the network may authorize transmission resources for the UE based on the to-be-transmitted data volume and/or the remaining delay budget indicated in the BSR reported for the first time.

FIG. 8 illustrates a method for reporting BSR according to an exemplary embodiment, which is executed by the UE. As shown in FIG. 8, the method for reporting BSR includes:
step S801, updating and reporting the BSR in case of that the at least one of the to-be-transmitted data volume of the UE and the remaining delay budget of the to-be-transmitted data volume is changed and a reported value of the BSR is changed.

If the BSR is updated and reported when at least one of the to-be-transmitted data volume of the UE and the remaining delay budget of the to-be-transmitted data volume is changed, it may cause the UE to report the BSR frequently, thereby resulting in a waste of network resources.

In the present disclosure, the BSR is updated and reported in case of that the at least one of the to-be-transmitted data volume of the UE and the remaining delay budget of the to-be-transmitted data volume is changed and the reported value of the BSR is changed, which reduces the number of times that the BSR is reported, and thus reduces the waste of network resources.

For example, assuming that the reported values reported in the BSR are 1 and 2, 1 corresponds to a range [0, 1000] of the to-be-transmitted data volume, and 2 corresponds to a range [1001, 2000] of the to-be-transmitted data volume, if the previous to-be-transmitted data volume is 500, and the current to-be-transmitted data volume is 800, which is still in the range [0, 1000], the reported value of the BSR does not change, and the UE may not update and report the BSR. When the to-be-transmitted data volume changes to be 1500, which is within the range [1001, 2000], the reported value of the BSR changes from 1 to 2, and then the UE updates and reports the BSR.

It can be seen that in the present disclosure, the BSR message is updated and reported in the case where the to-be-transmitted data volume and/or the remaining delay budget is changed and the reported value of the BSR is changed, so that the condition for updating and reporting the BSR message is stricter, which reduces the number of times that the BSR message is updated and reported, and the waste of network resources.

In the above technical solution, the BSR is updated and reported in the case where the at least one of the to-be-transmitted data volume of the UE and the remaining delay budget of the to-be-transmitted data volume is changed and the reported value of the BSR is changed, so that the condition for updating and reporting the BSR message is stricter, which reduces the number of times that the BSR message is reported, and avoids the waste of network resources due to the frequent reporting of the BSR message.

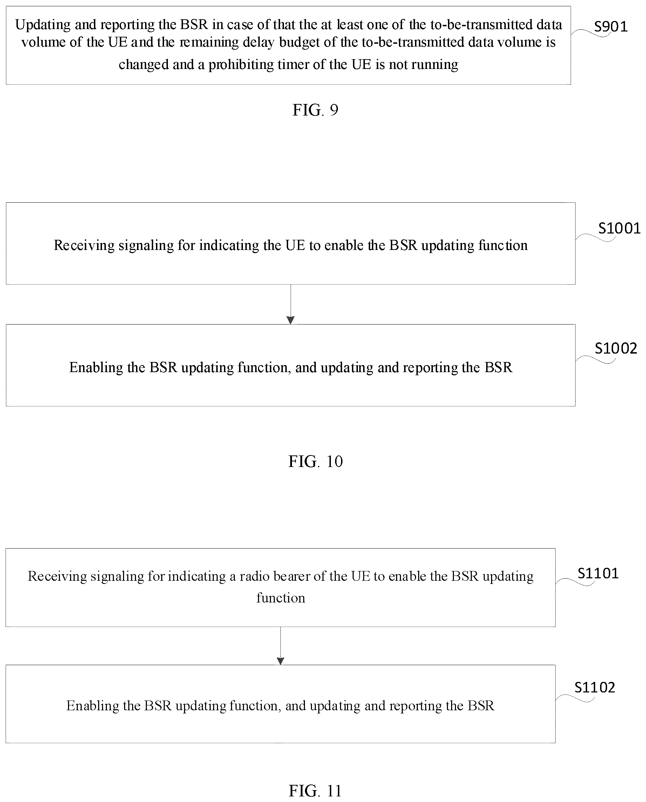

FIG. 9 illustrates a method for reporting BSR according to an exemplary embodiment, which is executed by the UE. As shown in FIG. 9, the method for reporting BSR includes:
step S901, updating and reporting the BSR in case of that the at least one of the to-be-transmitted data volume of the UE and the remaining delay budget of the to-be-transmitted data volume is changed and a prohibiting timer of the UE is not running.

The prohibiting timer is a timer for prohibiting the reporting of the BSR message. The UE may not update and report the BSR message when the prohibiting timer is running, and the UE may update and report the BSR message when the prohibiting timer is not running.

For example, the running period of the prohibiting timer is 3ms, and within 3 ms during which the prohibiting timer is running, the UE does not update and report the BSR message even if the to-be-transmitted data volume of the UE and/or the remaining delay budget is changed; and after the prohibiting timer runs for 3ms, the UE may update and report the BSR message if the to-be-transmitted data volume of the UE and/or the remaining delay budget is changed.

It can be seen that by configuring the prohibiting timer by the UE, the UE may be prohibited from updating and reporting the BSR message when the prohibiting timer is running, thereby reducing the number of times that the BSR message is reported and reducing the waste of network resources.

In the above technical solution, in the case where at least one of the to-be-transmitted data volume of the UE and the remaining delay budget of the to-be-transmitted data volume is changed, and the prohibiting timer configured in the UE is not running, the UE may report the BSR during the period in which the prohibiting timer is not running, which also reduces the number of times that the BSR message is reported, and thus avoids the waste of the network resources due to frequent reporting of the BSR message.

It is to be understood that the examples shown in FIGS. 7, 8 and 9 above may be separate embodiments, or any two or all the three thereof are combined to form a new embodiment]

For example, the combination of the examples shown in FIGS. 8 and 9 may obtain that the BSR message is updated and reported in the case where at least one of the to-be-transmitted data volume of the UE and the remaining delay budget of the to-be-transmitted data volume is changed, and the reported value of the BSR is changed, and the prohibiting timer configured in the UE is not running. In this case, the UE updates and reports the BSR message when the prohibiting timer is not running and the reported value of the BSR message is changed, so that the updating and reporting of the BSR message is stricter than that in the separate steps S602 or S603, which further avoids the waste of network resources due to frequent reporting of the BSR message.

FIG. 10 illustrates a method for reporting BSR according to an exemplary embodiment, which is executed by the UE. As shown in FIG. 10, the method includes steps S1001 and S1002.

In step S1001, signaling for indicating the UE to enable the BSR updating function is received.

The UE may receive the signaling for enabling the BSR updating function, i.e., the UE may receive the signaling for the BSR updating function, and after receiving the signaling, the UE may enable the BSR updating function. The BSR updating function may be put into operation on all logical channels of the UE and/or logical channel groups.

The UE may implicitly determine that the UE itself may use the BSR updating function.

For example, the UE may determine that the UE itself may enable the BSR updating function when receiving a change threshold of the to-be-transmitted data volume from the network.

For example, the UE determines that the UE itself may enable the BSR updating function in case of determining that the BSR updating function may be used only when a periodic BSR is not triggered. If the UE is configured with the periodic BSR, the BSR may be reported periodically without using the BSR updating function proposed in the present disclosure. Therefore, when the BSR updating function proposed in the present disclosure is used, the use of the periodic BSR may be prohibited. The condition of reporting the BSR when enabling the BSR updating function is stricter than that in case of the periodic BSR, which makes the overhead of reporting the BSR by the UE relatively small.

In step S1002, the BSR updating function is enabled and the BSR is updated and reported.

After the UE enables the BSR updating function, if the UE determines that at least one of the to-be-transmitted data volume of the UE and the remaining delay budget of the to-be-transmitted data volume is changed, the UE updates and reports the BSR.

In the above technical solution, the BSR updating function may be put into operation at each UE granularity, so that the UE updates and reports the BSR if at least one of the to-be-transmitted data volume and the remaining delay budget of the to-be-transmitted data volume on all the logical channels or logical channel groups configured for the UE.

FIG. 11 illustrates a method for reporting BSR according to an exemplary embodiment, which is executed by the UE. As shown in FIG. 11, the method includes steps S1101 and S1102.

In step S1101, signaling for indicating a radio bearer of the UE to enable the BSR updating function is received.

The radio bearer (RB) is a service provided to a higher layer by L2 between the UE and UTRAN (UMTS terrestrial radio access network). The UE may receive signaling for indicating the radio bearer of the UE to enable the BSR updating function, so that all the logical channels or logical channel groups associated with the radio bearer of the UE may enable the BSR updating function.

For example, if the radio bearer is used to carry XR services, the XR services have a plurality of types of data packets, a first type of data packet is transmitted on a first logical channel, and a second type of data packet is transmitted on a second logical channel, these two logical channels are the logical channels associated with the radio bearer. Similarly, the association between the logical channel group and the radio bearer may also be determined in this way, which will not be repeated here.

The network may configure in advance which logical channels and logical channel groups the radio bearer of the UE is associated with.

The UE may implicitly determine that the radio bearer can enable the BSR updating function.

For example, in the case where the UE receives a change threshold of the to-be-transmitted data volume from the network for a particular radio bearer, the UE may implicitly determine that the radio bearer may enable the BSR updating function.

In step S1102, the BSR updating function is enabled, and the BSR is updated and reported.

After the radio bearer of the UE enables the BSR updating function, if the UE determines that the to-be-transmitted data volume in the buffer of the logical channel and/or logical channel group associated with the radio bearer or the remaining delay budget is changed, the UE updates and reports the BSR.

In the above technical solution, the BSR updating function may be put into operation at each radio bearer granularity, so that the UE updates and reports the BSR if at least one of the to-be-transmitted data volume of the radio bearer and the remaining delay budget of the to-be-transmitted data volume is changed.

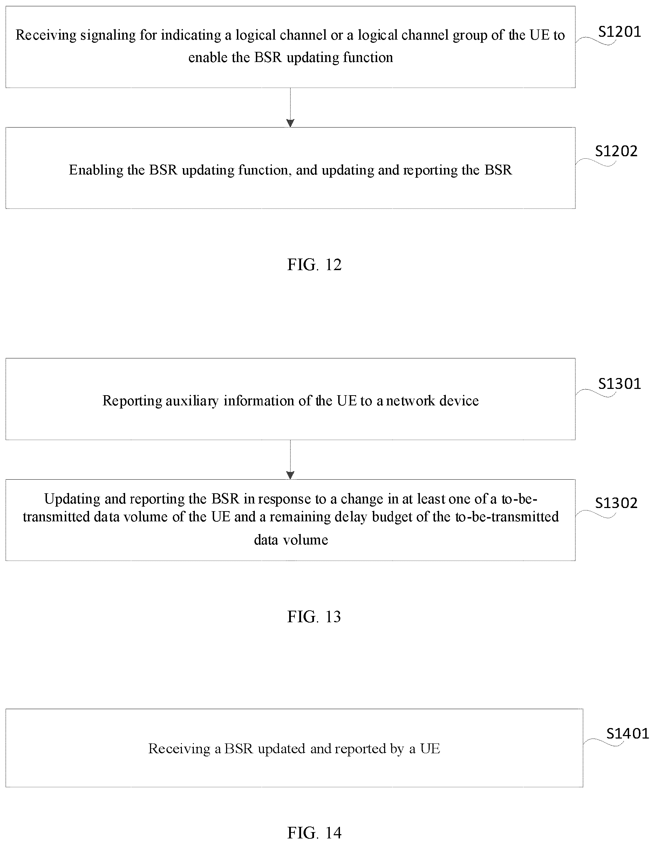

FIG. 12 illustrates a method for reporting BSR according to an exemplary embodiment, which is executed by the UE. As shown in FIG. 12, the method includes steps S1201 and S1202.

In step S1201, signaling for indicating a logical channel or a logical channel group of the UE to enable the BSR updating function is received.

The UE may receive signaling for indicating the logical channel to enable the BSR updating function, or may also receive signaling for indicating the logical channel group to enable the BSR updating function.

In an embodiment, the UE may receive signaling for indicating a first logical channel or a first logical channel group of the UE to enable the BSR updating function.

For example, the protocol stipulates the terminal to enable the BSR updating function for the first logical channel or the first logical channel group. The first logical channel is a specific logical channel and the first logical channel group is a specific logical channel group. The specific logical channel is a logical channel which is configured to use a specific type of BSR table such as a second BSR table to report the BSR, and the specific logical channel group is a logical channel group which is configured to use a specific type of BSR table such as the second BSR table to report the BSR.

In an embodiment, the second BSR table is a table for mapping buffer size newly introduced for XR services to different quantization levels, and the second BSR table has a mapping relationship between the buffer size and the quantization level of the buffer size.

The UE may implicitly determine that the logical channel or the logical channel group may enable the BSR updating function.

For example, in the case where the UE receives a change threshold of the to-be-transmitted data volume from the network for the logical channel, the UE may determine that the logical channel can enable the BSR updating function; and in the case where the UE receives a change threshold of the to-be-transmitted data volume from the network for the logical channel group, the UE may determine that the logical channel group can enable the BSR updating function.

In step S1202, the BSR updating function is enabled, and the BSR is updated and reported.

After the logical channel of the UE enables the BSR updating function, if the UE determines that the to-be-transmitted data volume in the buffer of the logical channel or the remaining delay budget is changed, the UE updates and reports the BSR. After the logical channel group enables the BSR updating function, if the UE determines that the to-be-transmitted data volume in the buffer of the logical channel group or the remaining delay budget is changed, the UE updates and reports the BSR

In the above technical solution, the BSR updating function may be put into operation at each logical channel granularity or each logical channel group granularity, so that the UE updates and reports the BSR if at least one of the to-be-transmitted data volume of the logical channel or logical channel group and the remaining delay budget of the to-be-transmitted data volume is changed.

It will be appreciated that the three embodiments illustrated in FIG. 10, FIG. 11 and FIG. 12 may be separate embodiments, or any two embodiments thereof may be combined to form a new embodiment, or all the three embodiments may be combined to form a new embodiment.

FIG. 13 illustrates a method for reporting BSR according to an exemplary embodiment, which is executed by the UE. As shown in FIG. 13, the method includes steps S1301 and S1302.

In step S1301, auxiliary information of the UE is reported to a network device.

The auxiliary Information includes at least one of whether the UE supports a capability of using a BSR updating function, or whether the UE expects to use the BSR updating function.

The UE may have a first type of BSR reporting capability and a second type of BSR report capability. The first type of BSR reporting capability is a capability of updating and reporting the BSR in the case where at least one of the to-be-transmitted data volume and the remaining delay budget of the to-be-transmitted data volume is changed; and the second type of BSR reporting capability is a capability of reporting the above mentioned regular BSR, periodic BSR, retransmission BSR, and padding BSR. When the UE reports the first type of BSR reporting capability, it indicates that the UE supports enabling the BSR updating function, and at this time, the network configures the BSR updating function for the UE.

When the UE receives a redundant authorization for to-be-transmitted data, it indicates that the UE expects to enable the BSR updating function, and at the time, the network configures the BSR updating function for the UE.

For example, after a data packet of the to-be-transmitted data in the buffer of the UE is discarded, the network may allocate authorizations for the UE according to the original data volume, while the terminal does not need so many authorizations, and at this time the UE receives a redundant authorization for the to-be-transmitted data, and the UE learns that the to-be-transmitted data volume reported in the BSR message acquired by the network is high. Therefore, the UE may report the auxiliary information in the expectation of enabling the BSR updating function to avoid the network allocating redundant authorizations for the to-be-transmitted data volume for the UE.

The authorization refers to the transmission resource authorized by the network for the to-be-transmitted data of the UE, and the transmission resource may be understood as an uplink transmission resource, which the UE needs to transmit the to-be-transmitted data in the buffer to the network.

In step S1302, the BSR is updated and reported in response to the change in at least one of the to-be-transmitted data volume of the UE and the remaining delay budget of the to-be-transmitted data volume.

After the UE reports the auxiliary information to the network, the network may configure the BSR updating function for the UE, and of course the BSR updating function may be agreed between the network and the UE through a protocol, at which time the UE may update and report the BSR in response to the change in at least one of the to-be-transmitted data volume and the remaining delay budget of the to-be-transmitted data volume.

In the above technical solution, the UE may report the auxiliary information of the UE to the network device to indicate that the UE itself has the capability of enabling the BSR updating function and/or expects to use the BSR updating function, so that the network may configure the BSR updating function for the UE based on the auxiliary information.

FIG. 14 illustrates a method for reporting BSR according to an exemplary embodiment, which is executed by a network device. As shown in FIG. 14, the method includes:
step S1401, receiving a BSR updated and reported by a UE.

The network device proposed in any embodiment of the present disclosure may be a device for communicating with UE, which may also be referred to as an access network device or a wireless access network device, and may be a transmission reception point (TRP), an evolved base station (evolved NodeB, eNB or eNodeB) in an LTE system, a home base station (e.g., home evolved NodeB, or home Node B, HNB), a base band unit (BBU), a wireless controller in a cloud radio access network (CRAN) scenario, a relay station, an access point, an in-vehicle device, a wearable device, a network device in a 5G network or a network device in a future evolved PLMN network, an access point (AP) in a WLAN, or a gNB in NR, which is not limited in the embodiment of the present disclosure.

This step may be referred to the above step S101, which will not be repeated herein.

In the above technical solution, after the network device receives the BSR updated and reported by the UE, since the BSR indicates that the to-be-transmitted data volume and/or the remaining delay budget of the to-be-transmitted data volume is changed, the network device may allocate transmission resources that match the changed to-be-transmitted data volume and/or remaining delay budget of the to-be-transmitted data volume to the UE based on the same, which avoids that the transmission resources allocated by the network device are more than the transmission resources required by the UE, thereby reducing a waste of transmission resources.

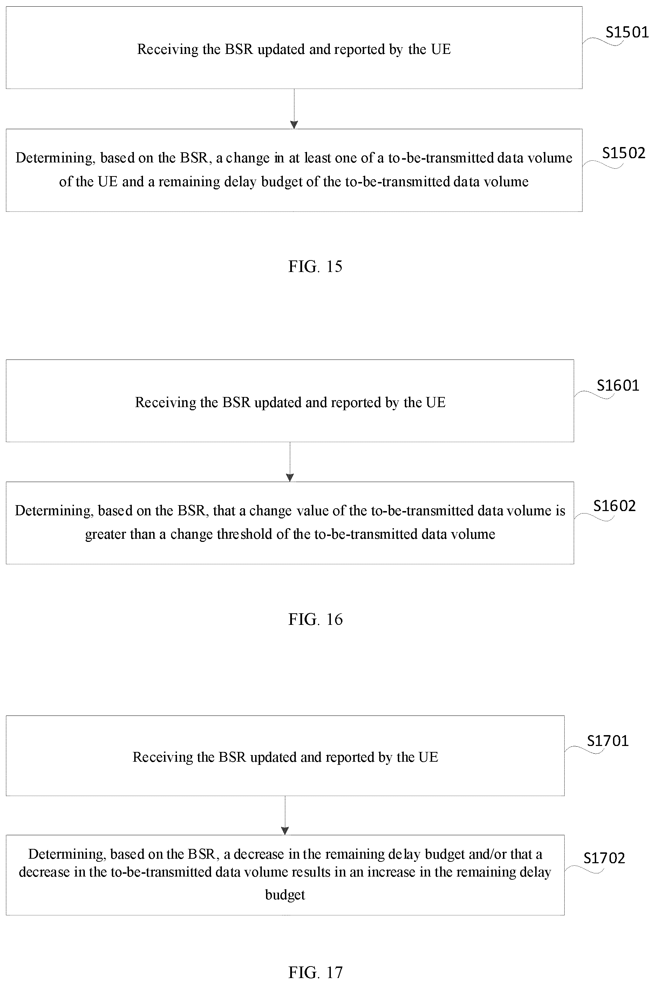

FIG. 15 illustrates a method for reporting BSR according to an exemplary embodiment, which is executed by the network device. As shown in FIG. 15, the method includes the following steps.

In step S1501, the BSR updated and reported by the UE is received.

This step may be referred to the above step S101, which will not be repeated herein]

In step S 1502, a change in at least one of a to-be-transmitted data volume of the UE and a remaining delay budget of the to-be-transmitted data volume is determined based on the BSR.

This step may be referred to the above step S101 above, which will not be repeated herein.

In the above technical solution, in the case where the BSR updated and reported by the UE is received, the transmission resources matching the to-be-transmitted data volume or remaining delay budget may be allocated to the UE based on the to-be-transmitted data volume or remaining delay budget indicated in the BSR.

FIG. 16 illustrates a method for reporting BSR according to an exemplary embodiment, which is executed by the network device. As shown in FIG. 16, the method includes the following steps.

In step S1601, the BSR updated and reported by the UE is received.

This step may be referred to the above step S101, which will not be repeated herein.

In step S 1602, a change value of the to-be-transmitted data volume being greater than a change threshold of the to-be-transmitted data volume is determined based on the BSR.

This step may be referred to above step S201, which will not be repeated herein.

In the above technical solution, the network device receives the BSR updated and reported by the UE when the change value of the to-be-transmitted data volume of the UE is greater than the change threshold of the to-be-transmitted data volume, and thus the times that the network device receives the reported BSRs is reduced, which reduces the waste of network resources.

FIG. 17 illustrates a method for reporting BSR according to an exemplary embodiment, which is executed by the network device. As shown in FIG. 17, the method includes the following steps.

In step S1701, the BSR updated and reported by the UE is received.

This step may be referred to the above step S101, which will not be repeated herein.

In step S 1702, a decrease in the remaining delay budget and/or that a decrease in the to-be-transmitted data volume results in an increase in the remaining delay budget is determined based on the BSR.

This step may be referred to the above steps S301 and S401, which will not be repeated herein.

In the above technical solution, in the case where the remaining delay budget decreases, the BSR is updated and reported, so that a smaller remaining delay budget is transmitted to the network device, and thus the network allocates the transmission resources for the UE as soon as possible based on the updated and reported BSR, so as to complete the urgent scheduling of the to-be-transmitted data. In the case where the decrease in the to-be-transmitted data volume results in the increase in the remaining delay budget, the BSR is updated and reported, so that the to-be-transmitted data volume of the to-be-transmitted data of the newly arrived in the buffer and/or the remaining delay budget of the to-be-transmitted data volume may be transmitted to the network, and thus the network allocates transmission resources matching the to-be-transmitted data newly arrived in the buffer to the UE based on the updated and reported remaining delay budget.

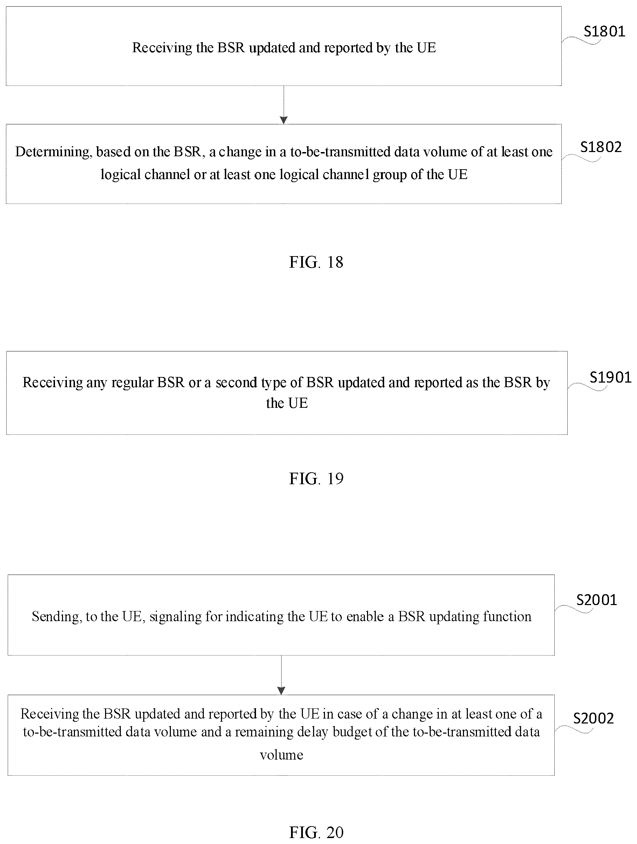

FIG. 18 illustrates a method for reporting BSR according to an exemplary embodiment, which is executed by the network device. As shown in FIG. 18, the method includes the following steps.

In step S1801, the BSR updated and reported by the UE is received.

This step may be referred to the above step S101, which will not be repeated herein.

In step S 1802, a change in a to-be-transmitted data volume of at least one logical channel or at least one logical channel group of the UE is determined based on the BSR,

This step may be referred to the above step S501, which will not be repeated herein.

In the above technical solution, in the case where the to-be-transmitted data volume of the at least one logical channel or the at least one logical channel group is changed, an updated and reported BSR may be received, and the network allocates matching transmission resources for the UE based on the changed to-be-transmitted data volume indicated in the re-reported BSR.

FIG. 19 illustrates a method for reporting BSR according to an exemplary embodiment, which is executed by the network device. As shown in FIG. 19, the method includes:
step S1901, receiving any regular BSR or a second type of BSR updated and reported by the UE as the BSR.

This step may be referred to the above step S601, which will not be repeated herein.

FIG. 20 illustrates a method for reporting BSR according to an exemplary embodiment, which is executed by the network device. As shown in FIG. 20, the method for reporting BSR includes the following steps.

In step S2001, signaling for indicating the UE to enable a BSR updating function is sent to the UE.

If the network device knows that the UE is a UE performing XR service, it sends the signaling for indicating the UE to enable the BSR updating function to the UE to inform the UE to enable the BSR updating function.

After the network device notifies the UE to enable the BSR updating function, the BSR updating function is put in operation on all logical channels or logical channel groups of the UE.

The network device may implicitly notify the UE to enable the BSR updating function.

For example, the network device may notify the UE of a change threshold of a to-be-transmitted data volume of a certain logical channel or a certain logical channel group, and the network device may also notify the UE to use the BSR updating function when the periodic BSR is not configured, thereby implicitly notifying the UE to enable the BSR updating function.

In step S2002, the BSR updated and reported by the UE is received.

This step may refer to the above step S101, which will not be repeated here.

In the above technical solution, the network may configure the BSR updating function for the UE to be put in operation at each UE granularity, such that the UE updates and reports the BSR in case where at least one of the to-be-transmitted data volume of the UE and the remaining delay budget of the to-be-transmitted data volume is changed.

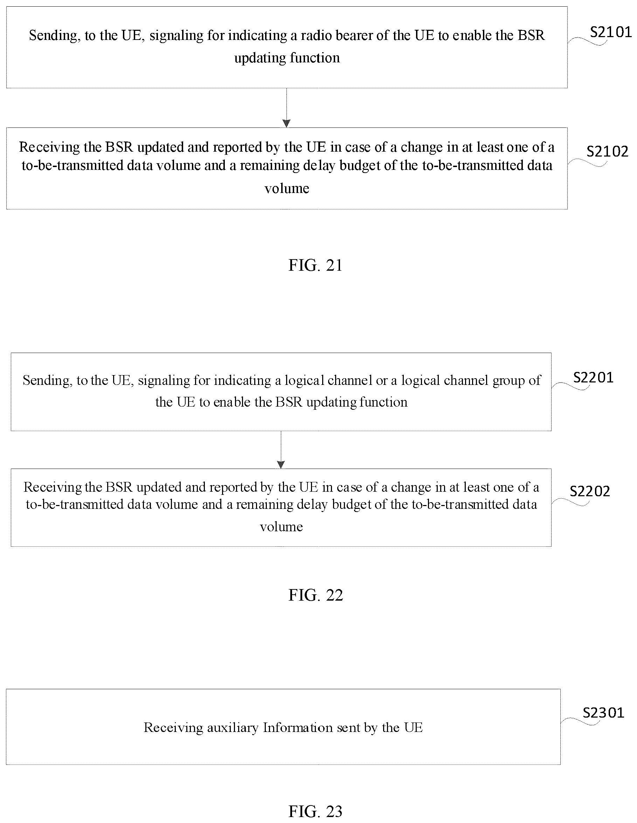

FIG. 21 illustrates a method for reporting BSR according to an exemplary embodiment, which is executed by the network device. As shown in FIG. 21, the method for reporting BSR includes the following steps.

In step S2101, signaling for indicating a radio bearer of the UE to enable the BSR updating function is sent to the UE.

If the network device knows that the UE is a UE performing XR service, it sends the signaling for indicating the radio bearer to enable the BSR updating function to the UE to inform the radio bearer that it can enable the BSR updating function.

After the network device notifies the UE to enable the BSR updating function, the BSR updating function is put in operation on all logical channels or logical channel groups associated with the radio bearer.

The network device may implicitly notify the radio bearer to enable the BSR updating function.

For example, the network device may notify the UE of a change threshold of a to-be-transmitted data volume of at least one logical channel or at least one logical channel group associated with the radio bearer, thereby implicitly notifying the UE to enable the BSR updating function.

In step S2102, the BSR updated and reported by the UE is received.

This step may refer to the above step S101, which will not be repeated here.

In the above technical solution, the network may configure the BSR updating function for the UE to be put in operation at each radio bearer granularity, such that the UE updates and reports the BSR in case where at least one of the to-be-transmitted data volume of the radio bearer and the remaining delay budget of the to-be-transmitted data volume is changed.

FIG. 22 illustrates a method for reporting BSR according to an exemplary embodiment, which is executed by the network device. As shown in FIG. 22, the method for reporting BSR includes the following steps.

In step S2201, signaling for indicating a logical channel or a logical channel group of the UE to enable the BSR updating function is sent to the UE.

If the network device knows that the UE is a UE performing XR service, it sends the signaling for indicating the logical channel to enable the BSR updating function to the UE to inform the logical channel to enable the BSR updating function; and it may also the signaling for indicating the logical channel group to enable the BSR updating function to the UE to inform the logical channel group to enable the BSR updating function

The network device may implicitly notify the UE that the logical channel or the logical channel group may enable the BSR updating function.

For example, the network device may notify the UE of a respective change threshold of a to-be-transmitted data volume of at least one logical channel or at least one logical channel group, thereby implicitly notifying the logical channel or the logical channel group to enable the BSR updating function.

In step S2202, the BSR updated and reported by the UE is received.

This step may refer to the above step S101, which will not be repeated here.

In the above technical solution, the network may configure the BSR updating function for the UE to be put in operation at each logical channel granularity or each logical channel group granularity, such that the UE updates and reports the BSR in case where at least one of the to-be-transmitted data volume of the logical channel or logical channel group and the remaining delay budget of the to-be-transmitted data volume is changed.

FIG. 23 illustrates a method for reporting BSR according to an exemplary embodiment, which is executed by the network device. As shown in FIG. 23, the method for reporting BSR includes:
step S2301, receiving auxiliary information sent by the UE.

The auxiliary information includes at least one of: whether the UE supports a capability of using a BSR updating function, or whether the UE expects to use the BSR updating function.

This step may refer to the above step S 1301, which will not be repeated here.

In the above technical solution, the network device may receive the auxiliary information reported by the UE to determine that the UE itself has the capability of enabling the BSR updating function and/or expects to use the BSR updating function, and thus configure the BSR updating function for the UE based on the auxiliary information.

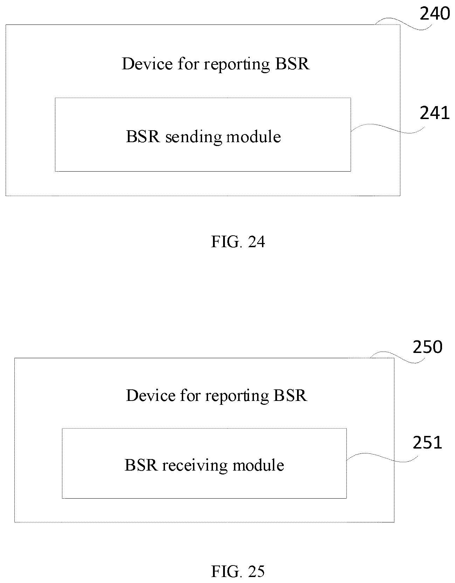

FIG. 24 illustrates a device for reporting BSR according to an exemplary embodiment, which is implemented by a UE. As shown in FIG. 24, the device for reporting BSR 240 including a BSR sending module 241.

The BSR sending module 241 is configured to update and report the BSR in response to a change in at least one of a to-be-transmitted data volume of the UE and a remaining delay budget of the to-be-transmitted data volume.

Optionally, the BSR sending module 241 includes:
a first BSR sending sub-module configured to update and report the BSR in response to a change value of the to-be-transmitted data volume being greater than a change threshold of the to-be-transmitted data volume.

Optionally, the BSR sending module 241 includes:
a second BSR sending sub-module configured to update and report the BSR in case of a decrease in the remaining delay budget; and/or;
a third BSR sending sub-module configured to update and report the BSR in case of that a decrease in the to-be-transmitted data volume results in an increase in the remaining delay budget.

Optionally, the BSR sending module 241 includes:
a fourth BSR sending sub-module configured to update and report the BSR in response to a change in a to-be-transmitted data volume of at least one logical channel or at least one logical channel group of the UE.

Optionally, the BSR sending module 241 includes:
a fifth BSR sending sub-module configured to update the BSR reported to a network device to be any regular BSR or a second type of BSR.

Optionally, the BSR sending module 241 includes:
a sixth BSR sending sub-module configured to update and report the BSR in case of that the at least one of the to-be-transmitted data volume of the UE and the remaining delay budget of the to-be-transmitted data volume is changed and at least one of following conditions exists:
the UE being configured with a BSR updating function, a reported value of the BSR being changed, or a prohibiting timer of the UE being not running.

Optionally, the BSR sending module 241 includes:
a sixth BSR sending sub-module configured to update and report the BSR by enabling a BSR updating function;
wherein the BSR updating function is determined to be enabled by at least one of following conditions:
receiving signaling for indicating the UE to enable the BSR updating function;
receiving signaling for indicating a radio bearer of the UE to enable the BSR updating function; or
receiving signaling for indicating a logical channel or a logical channel group of the UE to enable the BSR updating function.

Optionally, the device for reporting BSR 240 includes:
an auxiliary information reporting sub-module configured to report auxiliary information of the UE to a network device, the auxiliary information including at least one of:
whether the UE supports a capability of using a BSR updating function, or whether the UE expects to use the BSR updating function.

FIG. 25 illustrates a device for reporting BSR according to an exemplary embodiment, which is implemented by a UE. As shown in FIG. 25, the device for reporting BSR 250 including a BSR receiving module 251.

The BSR receiving module 251 is configured to receive a BSR updated and reported by a UE.

Optionally, the BSR receiving module 251 includes:
a first BSR receiving sub-module configured to receive the BSR updated and reported by the UE; and
a first report determining sub-module configured to determine, based on the BSR, a change in at least one of a to-be-transmitted data volume of the UE and a remaining delay budget of the to-be-transmitted data volume.

Optionally, the first report determining sub-module includes:
a second report determining sub-module configured to determine, based on the BSR, that a change value of the to-be-transmitted data volume is greater than a change threshold of the to-be-transmitted data volume.

Optionally, the first report determining sub-module includes:
a third report determining sub-module configured to determine, based on the BSR, a decrease in the remaining delay budget and/or that a decrease in the to-be-transmitted data volume results in an increase in the remaining delay budget.

Optionally, the first report determining sub-module includes:
a fourth report determining sub-module configured to determine, based on the BSR, a change in a to-be-transmitted data volume of at least one logical channel or at least one logical channel group of the UE.

Optionally, the BSR receiving module 251 includes:
a second BSR receiving sub-module configured to receive any regular BSR or a second type of BSR updated and reported by the UE as the BSR.

Optionally, the device for reporting BSR 250 includes:
a first indicating sub-module configured to send, to the UE, signaling for indicating the UE to enable a BSR updating function; and/or
a second indicating sub-module configured to send, to the UE, signaling for indicating a radio bearer of the UE to enable the BSR updating function; and/or
a third indicating sub-module configured to send, to the UE, signaling for indicating a logical channel or a logical channel group of the UE to enable the BSR updating function.

Optionally, the first indicating sub-module includes:
a first data sending sub-module configured to send, to the UE, a change threshold of the to-be-transmitted data volume of the UE, or indicate the UE to use the BSR updating function in a state of that the UE is not configured with a periodic BSR.

Optionally, the second indicating sub-module includes:
a second data sending submodule configured to send, to the radio bearer, a change threshold of a to-be-transmitted data volume of the radio bearer.

Optionally, the third indicating sub-module includes:
a third data sending sub-module configured to send, to the logical channel or the logical channel group, a change threshold of a to-be-transmitted data volume of the logical channel or the logical channel group.

Optionally, the device for reporting BSR 250 includes:
an auxiliary information receiving module configured to receive auxiliary information sent by the UE, the auxiliary information including at least one of:
whether the UE supports a capability of using a BSR updating function, or whether the UE expects to use the BSR updating function.

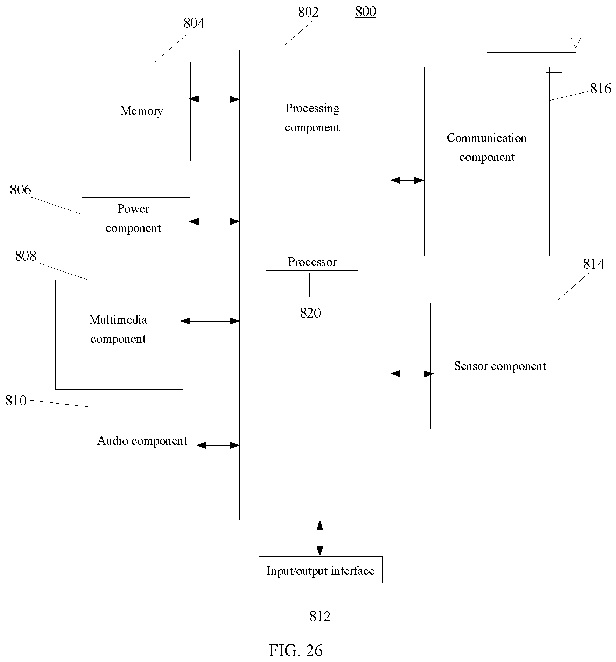

FIG. 26 is a block diagram a device 800 of a UE according to an exemplary embodiment. For example, the device 800 may be a mobile phone, a computer, a digital broadcasting device, a messaging device, a game console, a tablet device, a medical device, a fitness device, a personal digital assistant, or the like.

Referring to FIG. 26, the device 800 may include one or more of a processing component 802, a memory 804, a power component 806, a multimedia component 808, an audio component 810, an input/output (I/O) interface 812, a sensor component 814, and a communication component 816.

The processing component 802 generally controls the overall operations of the device 800, such as operations associated with display, telephone calls, data communications, camera operations, and recording operations. The processing component 802 may include one or more processors 820 to execute instructions to generate all or part of the steps of the foregoing method. In addition, the processing component 802 may include one or more modules to facilitate interaction between the processing component 802 and other components. For example, the processing component 802 may include a multimedia module to facilitate the interaction between the multimedia component 808 and the processing component 802.

The memory 804 is configured to store various types of data to support the operation at the device 800. Examples of these data include instructions for any application or method operating on the device 800, contact data, phone book data, messages, pictures, videos and the like. The memory 804 may be implemented by any type of volatile or non-volatile storage device or a combination thereof, such as static random access memory (SRAM), electrically erasable programmable read-only memory (EEPROM), erasable and programmable read-only memory (EPROM), programmable read-only memory (PROM), read-only memory (ROM), magnetic memory, flash memory, magnetic disk or optical disk.

The power component 806 provides power to various components of the device 800. The power component 806 may include a power management system, one or more power supplies, and other components associated with generating, managing, and distributing power for the device 800.

The multimedia component 808 includes a screen that provides an output interface between the device 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundary of the touch or slide action, but also detect the duration and pressure related to the touch or slide operation. In some embodiments, the multimedia component 808 includes a front camera and/or a rear camera. When the device 800 is in an operation mode, such as a shooting mode or a video mode, the front camera and/or the rear camera can receive external multimedia data. Each of the front camera and rear camera may be a fixed optical lens system or have focal length and optical zoom capabilities.

The audio component 810 is configured to output and/or input audio signals. For example, the audio component 810 includes a microphone (MIC), and when the device 800 is in an operation mode, such as a call mode, a recording mode, and a voice recognition mode, the microphone is configured to receive an external audio signal. The received audio signal can be further stored in the memory 804 or sent via the communication component 816. In some embodiments, the audio component 810 further includes a speaker for outputting audio signals.

The I/O interface 812 provides an interface between the processing component 802 and a peripheral interface module. The above-mentioned peripheral interface module may be a keyboard, a click wheel, a button, and the like. These buttons may include but are not limited to home button, volume button, start button, and lock button.

The sensor component 814 includes one or more sensors for providing the device 800 with various aspects of state evaluation. For example, the sensor component 814 can detect the on/off status of the device 800 and the relative positioning of components. For example, the component is a display and keypad of the device 800. The sensor component 814 can also detect the position change of the device 800 or a component of the device 800, the presence or absence of contact between the user and the device 800, the orientation or acceleration/deceleration of the device 800, and the temperature change of the device 800. The sensor component 814 may include a proximity sensor configured to detect the presence of nearby objects when there is no physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the device 800 and other devices. The device 800 can access a wireless network based on a communication standard, such as WiFi, 2G, 3G, or a combination thereof. In an exemplary embodiment, the communication component 816 receives a broadcast signal or broadcast related information from an external broadcast management system via a broadcast channel. In an exemplary embodiment, the communication component 816 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the device 800 may be implemented by one or more of application specific integrated circuit (ASIC), digital signal processor (DSP), digital signal processing device (DSPD), programmable logic devices (PLD), field programmable gate array (FPGA), controller, microcontroller, microprocessor, or other electronic components, to perform the above-mentioned methods.

An exemplary embodiment also provides a non-transitory computer-readable storage medium including instructions, such as the memory 804 including instructions, and the instructions may be executed by the processor 820 of the device 800 to generate the foregoing method. For example, the non-transitory computer-readable storage medium may be ROM, random access memory (RAM), CD-ROM, magnetic tape, floppy disk, optical data storage device and the like.

The above device may be a stand-alone electronic device and may also be a part of a stand-alone electronic device. For example, in an embodiment, the device may be an integrated circuit (IC) or a chip. The IC may be a single IC or a collection of a plurality of ICs. The chip may include, but is not limited to, a GPU (Graphics Processing Unit), CPU (Central Processing Unit), FPGA (Field Programmable Gate Array), DSP (Digital Signal Processor), ASIC (Application Specific Integrated Circuit), SOC (System on Chip) and so on. The aforementioned integrated circuit or chip may be used to execute executable instructions (or codes) to implement the resource selection method described above. The executable instructions may be stored in the integrated circuit or chip, or may be obtained from other devices or equipment, for example, the integrated circuit or chip includes a processor, a memory, and an interface for communicating with other devices. The executable instructions may be stored in the memory, and the resource selection method described above is implemented when the executable instructions are executed by the processor; or the integrated circuit or chip may receive the executable instructions through the interface and transmit the same to the processor for execution to implement the resource selection method described above.

In another exemplary embodiment, there is also provided a computer program product including a computer program capable of being executed by a programmable device, the computer program has a code portion for executing the resource selection method described above when being executed by the programmable device.

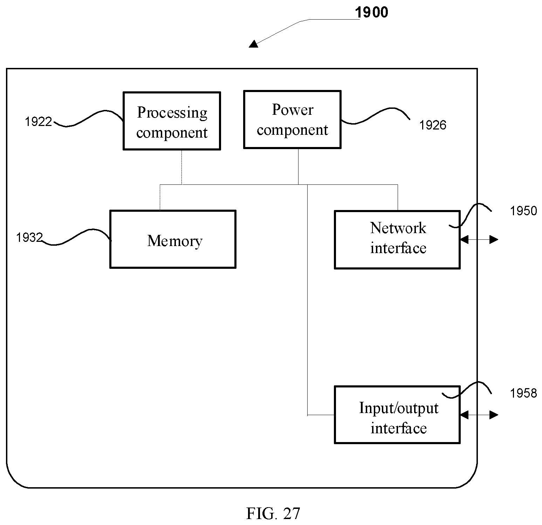

FIG. 27 is a block diagram a network device 1900 according to an exemplary embodiment. For example, the network device 1900 may be provided as a base station. Referring to FIG. 27, the network device includes a processing component 1922 which further includes one or more processors, and a memory resource which is represented by a memory 1932 and is configured for storing instructions such as application programs executable by the processing component 1922. The application program stored in the memory 1932 may include one or more modules each corresponding to a set of instructions. Furthermore, the processing component 1922 is configured to execute instructions to perform the above resource selection method.

The network device 1900 may also include a power component 1926 configured to perform power management of the device 1900, a wired or wireless network interface 1950 configured to connect the network device 1900 to a network, and an input/output (I/O) interface 1958.

A person skilled in the art may easily conceive of other embodiments of the present disclosure upon consideration of the specification and practice of the invention disclosed herein. The present disclosure is intended to cover any variations, uses, or adaptations of the present disclosure that follow the general principles of the present disclosure and include the common knowledge or conventional technical means in the technical field not disclosed by the present disclosure. The specification and embodiments are to be regarded as exemplary only, with the true scope and spirit of the present disclosure being indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

It is to be understood that the solutions presented in the following examples are illustrative of embodiments of the method and device for reporting BSR, the apparatus, the computer-readable storage medium and the chip of the present disclosure.
1. An operation mechanism in which a network configures a terminal or a protocol stipulates the terminal to report the newest BSR.
   a). As an embodiment: a mechanism in which the network configures the terminal or the protocol stipulates the terminal to report the newest BSR in a scenario in which a data volume increases or decreases.

As an embodiment: an increase in the to-be-transmitted data volume implies the arrival of new data.

As an embodiment: or the to-be-transmitted data volume decreases, e.g., a discard by the PDCP occurs.

As an embodiment: a change in the to-be-transmitted data volume may be based on the statistics of a data packet or a data packet set. For example: the volume of discarded data packets may be measured by the number of discarded data packets or the number of discarded bits/bytes; wherein the number of discarded data packets may be based on the number of data packets or the number of data packet sets.

As an embodiment, the to-be-transmitted data volume may be determined by the terminal based on the data volume in the PDCP layer and/or RLC (Radio Link Control).

b). As an embodiment: the network configures the terminal or the protocol stipulates the terminal to report the BSR if the remaining delay budget of the to-be-transmitted data volume is changed.

As an embodiment: the BSR is performed if the remaining delay budget of the to-be-transmitted data volume is less than or equal to a threshold.

As an embodiment: the threshold may be obtained from a core network and notified to the UE via gNB (the next Generation Node B, 5G base station), or may be based on a network convention.

As an embodiment: if the remaining delay budget of the to-be-transmitted data volume increases or decreases compared to the previous reporting, the BSR is reported.

c). As an embodiment: in an application scenario, the BSR reporting is to update the previously reported BSR (updating the effective information thereof).

As an embodiment: the previously reported BSR carries the remaining delay budget information, and the relevant field in the subsequently reported BSR is empty, which may mean that the previously reported BSR is no longer valid, or that the remaining delay budget information carried in the subsequently reported BSR is no longer valid.

2. The network configures the terminal or the protocol stipulates the terminal to update and report the BSR when the to-be-transmitted data volume is changed.
a). As an embodiment: the network configures the terminal or the protocol stipulates the terminal to report the BSR when the to-be-transmitted data volume is changed.

As an embodiment: the BSR is reported after the PDCP layer performs a bulk data packet discarding operation (it is updated as long as there is the data packet discarding operation), wherein the bulk data packet discarding operation results in a change in the to-be-transmitted data volume of the termina, so the BSR is reported.

b). As an embodiment: the network configures the terminal or the protocol stipulates the terminal to report the BSR after the change in the to-be-transmitted data volume exceeds a predetermined threshold.

As an embodiment: the network configures the terminal or the protocol stipulates the terminal to report the BSR after the PDCP layer performs the bulk data packet discarding operation and the discarded data packet volume exceeds a predetermined threshold.

As an embodiment: the change in the to-be-transmitted data volume may be based on the statistics of data packet or data packet set. For example: the discarded data packet volume may be measured by the number of discarded data packets or the number of discarded bits/bytes; wherein the number of discarded data packets may be based on the number of data packets or data packet sets.

As an embodiment: the predetermined threshold may be obtained from the core network and notified to the UE via gNB (the next Generation Node B, 5G base station), or may be based on a network convention.

c). As an embodiment: the network configures the terminal or the protocol stipulates the terminal to report the BSR if the remaining delay budget of the to-be-transmitted data volume is changed.

Or, a condition is added that the reporting is performed only when the remaining delay budget becomes smaller.

As an example, the BSR is reported only when the scheduling urgency increases. For example, if 1000 bits are actively deleted by the network, and new 1000 bits arrive, the remaining delay budget becomes larger for the same data volume, and at this time, there is no need to update the BSR. This has the advantage of allowing the network to allocate transmission resources to scheduling with higher scheduling urgency.

d). As an embodiment: the statistic that the to-be-transmitted data volume is changed may be based on the statistic of the to-be-transmitted data volume of a logical channel or one or more logical channels or all logical channels of a logical channel group.

e). As an embodiment: the BSR triggered by the change in the to-be-transmitted data volume may be triggered based on a logical channel, i.e., the BSR is triggered by a change in the to-be-transmitted data volume on a logical channel.

f). As an embodiment: the BSR triggered by the change in the to-be-transmitted data volume may be triggered based on a logical channel group, i.e., the BSR is triggered if the sum of the to-be-transmitted data volume on all the logical channels in the logical channel group is changed.

3. The network configures the terminal or the protocol stipulates the terminal to report the BSR when there is at least one of the change in the to-be-transmitted data volume, the change in the remaining delay budget of the to-be-transmitted data volume or the change in the remaining delay budget of the to-be-transmitted data volume being less than or equal to a threshold, and the reported BSR may be any regular BSR or a new type of BSR which is additionally named, for example, updated BSR.

4. When the network configures the terminal or the protocol stipulates the terminal to report the BSR after the to-be-transmitted data volume is changed, or after the remaining delay budget of the to-be-transmitted data volume is changed or when the change in the remaining delay budget of the to-be-transmitted data volume being less than or equal to a threshold, the BSR may be associated with a specified logical channel ID or a new logical channel ID, and in this way, the base station may identify this type of the BSR through the logical channel ID after receiving the same.

As an embodiment, the new logical channel ID may be configured separately for Long BSR and Short BSR.

5. The network configures or the protocol stipulates an additional restriction condition for the terminal to update and report the BSR after the PDCP layer performs a bulk data packet discarding operation.

a). As an embodiment: the BSR may reported for the first time after the BSR updating and reporting function is configured and a condition is met.

b). As an embodiment: it may configure or stipulate that the terminal reports the BSR only when the reporting value of the BSR is changed.

c). As an embodiment: it may configure or stipulate that the terminal reporting follows the prohibiting timer restriction, i.e., the terminal reports the BSR only when the reported value of the BSR is changed and the prohibiting timer is not running, the prohibiting timer is activated after reporting, and the prohibiting timer is configured by the network.

6. Based on 1, the base station notifies the terminal through dedicated signaling or stipulates the terminal through the protocol to use the feature.
a). Manner 1: the enabling granularity may be per UE (per terminal) granularity or it configures whether to put this feature into operation for a single UE.

As an embodiment, the feature may be enabled if the base station knows that the terminal is a terminal performing XR services, which means that the feature is put into operation on all logical channels or logical channel groups of that UE.

b). Manner 2: the enabling granularity may be per RB (per radio bearer) granularity or it configures the feature to be put into operation per radio bearer.

As an embodiment, if the base station knows that the terminal is a terminal performing XR services, it notifies that the function is enabled for a specific RB, which means that it is put into operation on all logical channels or logical channel groups associated with that RB.

c). Manner 3: The enabling granularity may be per logical channel or logical channel group granularity.

As an embodiment, the base station notifies the terminal to enable the function for a specific logical channel or logical channel group.

d). The notifying manner of enabling the function is explicit or implicit.

As an embodiment: if the network notifies a data packet discarding threshold for a particular logical channel, it implies enabling the function.

e). As an embodiment: the function is only used when periodic BSR triggering is not configured (if the periodic BSR reporting is configured, it may be updated in time, but the periodic BSR requires higher overhead, this manner is better than the periodic BSR in that it is based on threshold event triggering, which has less reporting overhead).

f). As an embodiment, the protocol stipulates the terminal to enable the function for a specific logical channel or logical channel groups. The specific logical channel or logical channel group is a logical channel or logical channel group configured to use a specific type of BSR table (second BSR table) to reporting the BSR. As an embodiment, the second BSR table is a table that maps buffer size newly introduced for XR type services to different quantization levels.

7. Based on 1, that the base station notifies the terminal to use the function via dedicated signaling may be based on auxiliary information of the terminal.
a). The auxiliary information of the terminal includes whether the terminal supports the capability of using the function.
b). The auxiliary information of the terminal includes whether the terminal expects to use the function (if the terminal finds that the base station frequently allocates excess actual data authorizations, it is aware that the BSR acquired by the network may be too large, and will report the auxiliary information to identify that it expects to use the function).

## Claims

1. A method for reporting a buffer status report, BSR, performed by a user equipment, UE, and comprising:
updating and reporting the BSR in response to a change in at least one of a to-be-transmitted data volume of the UE and a remaining delay budget of the to-be-transmitted data volume.

2. The method according to claim 1, wherein updating and reporting the BSR in response to a change in the to-be-transmitted data volume of the UE comprises:
updating and reporting the BSR in response to a change value of the to-be-transmitted data volume being greater than a change threshold of the to-be-transmitted data volume.

3. The method according to claim 1, wherein updating and reporting the BSR in response to a change in the remaining delay budget of the to-be-transmitted data volume comprises:
updating and reporting the BSR in case of a decrease in the remaining delay budget; and/or
updating and reporting the BSR in case of that a decrease in the to-be-transmitted data volume results in an increase in the remaining delay budget.

4. The method according to claim 1, wherein updating and reporting the BSR in response to a change in the to-be-transmitted data volume of the UE comprises:
updating and reporting the BSR in response to a change in a to-be-transmitted data volume of at least one logical channel or at least one logical channel group of the UE.

5. The method according to claim 1, wherein updating and reporting the BSR comprises:
updating the BSR reported to a network device to be any regular BSR or a second type of BSR.

6. The method according to claim 1, wherein updating and reporting the BSR in response to the change in the at least one of the to-be-transmitted data volume of the UE and the remaining delay budget of the to-be-transmitted data volume comprises:
updating and reporting the BSR in case of that the at least one of the to-be-transmitted data volume of the UE and the remaining delay budget of the to-be-transmitted data volume is changed and at least one of following conditions exists:
the UE being configured with a BSR updating function, a reported value of the BSR being changed, or a prohibiting timer of the UE being not running.

7. The method according to claim 1, wherein updating and reporting the BSR comprises:
updating and reporting the BSR by enabling a BSR updating function;
wherein the BSR updating function is determined to be enabled by at least one of following conditions:
receiving signaling for indicating the UE to enable the BSR updating function;
receiving signaling for indicating a radio bearer of the UE to enable the BSR updating function; or
receiving signaling for indicating a logical channel or a logical channel group of the UE to enable the BSR updating function.

8. The method according to claim 7, wherein receiving the signaling for indicating the logical channel or the logical channel group of the UE to enable the BSR updating function comprises:
receiving signaling for indicating a first logical channel or a first logical channel group of the UE to enable the BSR updating function.

9. The method according to claim 1, further comprising, before updating and reporting the BSR:
reporting auxiliary information of the UE to a network device, the auxiliary Information comprising at least one of:
whether the UE supports a capability of using a BSR updating function, or whether the UE expects to use the BSR updating function.

10. A method for reporting a buffer status report, BSR, performed by a network device, and comprising:
receiving a BSR updated and reported by a user equipment, UE.

11. The method according to claim 10, wherein receiving the BSR updated and reported by the UE comprises:
receiving the BSR updated and reported by the UE; and
determining, based on the BSR, a change in at least one of a to-be-transmitted data volume of the UE and a remaining delay budget of the to-be-transmitted data volume.

12. The method according to claim 11, wherein determining, based on the BSR, a change in the to-be-transmitted data volume of the UE comprises:
determining, based on the BSR, that a change value of the to-be-transmitted data volume is greater than a change threshold of the to-be-transmitted data volume.

13. The method according to claim 11, wherein determining, based on the BSR, a change in the remaining delay budget of the to-be-transmitted data volume comprises:
determining, based on the BSR, a decrease in the remaining delay budget and/or that a decrease in the to-be-transmitted data volume results in an increase in the remaining delay budget.

14. The method according to claim 11, wherein determining, based on the BSR, a change in the to-be-transmitted data volume of the UE comprises:
determining, based on the BSR, a change in a to-be-transmitted data volume of at least one logical channel or at least one logical channel group of the UE.

15. The method according to claim 10, wherein receiving the BSR updated and reported by the UE comprises:
receiving any regular BSR or a second type of BSR updated and reported by the UE as the BSR.

16. The method according to claim 10, further comprising, before receiving the BSR updated and reported by the UE:
sending, to the UE, signaling for indicating the UE to enable a BSR updating function; and/or
sending, to the UE, signaling for indicating a radio bearer of the UE to enable the BSR updating function; and/or
sending, to the UE, signaling for indicating a logical channel or a logical channel group of the UE to enable the BSR updating function.

17. The method according to claim 16, wherein sending, to the UE, the signaling for indicating the UE to enable the BSR updating function through at least one of following implicit notification signaling manners:
sending, to the UE, a change threshold of the to-be-transmitted data volume of the UE, or indicating the UE to use the BSR updating function in a state of that the UE is not configured with a periodic BSR.

18. The method according to claim 16, wherein sending, to the radio bearer of the UE, the signaling for indicating the radio bearer to enable the BSR updating function comprises:
sending, to the UE, a change threshold of a to-be-transmitted data volume of the radio bearer.

19. The method according to claim 16, wherein sending, to the logical channel or the logical channel group of the UE, the signaling for indicating the logical channel or the logical channel group to enable the BSR updating function comprises:
sending, to the UE, a change threshold of a to-be-transmitted data volume of the logical channel or the logical channel group.

20. The method according to claim 10, further comprising:
receiving auxiliary information sent by the UE, the auxiliary information comprising at least one of:
whether the UE supports a capability of using a BSR updating function, or whether the UE expects to use the BSR updating function.

21. A device for reporting a buffer status report, BSR, configured in a user equipment, UE, and comprising:
a BSR sending module, configured to update and report the BSR in response to a change in at least one of a to-be-transmitted data volume of the UE and a remaining delay budget of the to-be-transmitted data volume.

22. A device for reporting a buffer status report, BSR, configured in a network device, and comprising:
a BSR receiving module, configured to receive a BSR updated and reported by a user equipment, UE.

23. A user equipment, UE, comprising:
a processor; and
a memory storing executable instructions of the processor,
wherein the processor is configured to implement the step of the method according to any one of claims 1 to 9 when executing the executable instructions.

24. A network device, comprising:
a processor; and
a memory storing executable instructions of the processor,
wherein the processor is configured to implement the step of the method according to any one of claims 10 to 20 when executing the executable instructions.

25. A computer-readable storage medium having computer program instructions stored thereon that, when being executed by a processor, implement the step of the method according to any one of claims 1 to 9, or the step of the method according to any one of claims 10 to 20.

26. A chip comprising a processor and an interface, the processor being configured to read instructions to perform the step of the method according to any one of claims 1 to 9, or the step of the method according to any one of claims 10 to 20.
